(19) Europäisches Patentamt / European Patent Office / Office européen des brevets

(11) **EP 4 761 181 A1**

(12) **DEMANDE DE BREVET EUROPEEN**

(43) Date de publication:
**17.06.2026 Bulletin 2026/25**

(21) Numéro de dépôt: **25217955.1**

(22) Date de dépôt: **24.11.2025**

(51) Classification Internationale des Brevets (IPC):
***H04L 9/40*** (2022.01) ***G06F 21/55*** (2013.01)
***G06F 21/57*** (2013.01) ***G06N 20/00*** (2019.01)
*H04L 41/0631* (2022.01) *H04L 41/069* (2022.01)
*H04L 41/142* (2022.01) *H04L 41/16* (2022.01)
*H04L 43/04* (2022.01)

(52) Classification Coopérative des Brevets (CPC):
**H04L 63/1425; G06F 21/552; G06F 21/577; G06N 20/00; H04L 63/1408;** H04L 41/064; H04L 41/069; H04L 41/142; H04L 41/16; H04L 43/04

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **12.12.2024 FR 2414018**

(71) Demandeur: **Commissariat à l'Energie Atomique et aux Energies Alternatives**
**75015 Paris (FR)**

(72) Inventeurs:
- **IBN KHEDER, Houda**
  **91191 GIF SUR YVETTE CEDEX (FR)**
- **OLIVEREAU, Alexis**
  **91191 GIF-SUR-YVETTE CEDEX (FR)**

(74) Mandataire: **Atout PI Laplace**
**Immeuble Up On**
**25 Boulevard Romain Rolland**
**CS 40072**
**75685 Paris Cedex 14 (FR)**

(54) **PROCEDE DE DETECTION D'ANOMALIES DANS LE TRAFIC DE DONNEES D'UN SYSTEME DE COMMUNICATION**

(57) L'invention concerne un procédé de détection d'anomalies dans les communications mises en œuvre dans un réseau, comprenant effectuer une analyse multi-échelle de données d'observation collectées avec N modules de classification automatique des communications Mi associé à une taille respective Ti de fenêtre d'observation, avec $Ti \neq Tj$ pour i,j = 1 à N et $i \neq j$,
une anomalie étant déterminée présente ou non à un instant donné en fonction des résultats de détection de chaque module Mi associé à la taille respective Ti de fenêtre d'observation.

EP 4 761 181 A1

[Fig. 3]

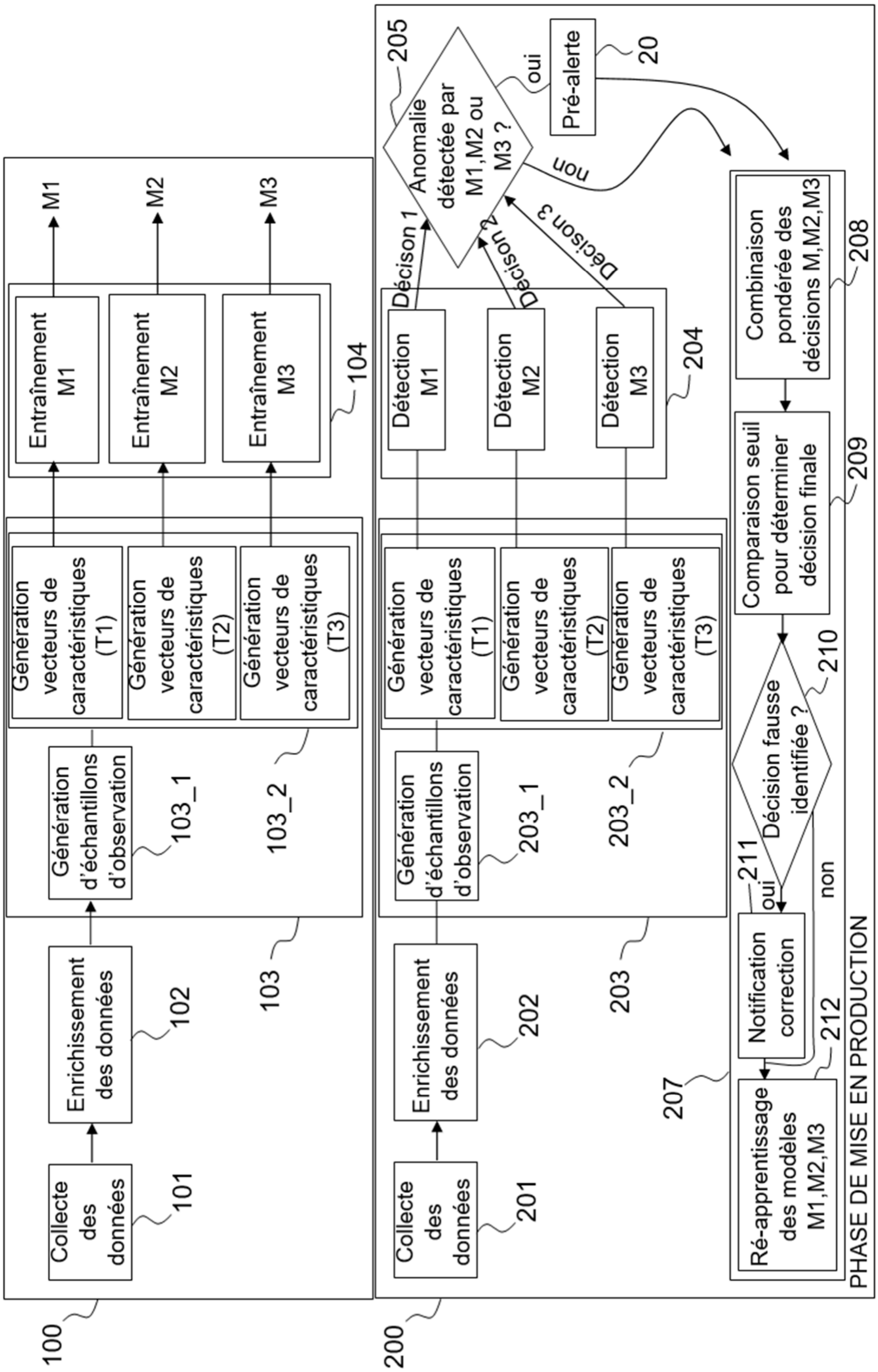
100
Collecte des données
101
Enrichissement des données
102
Génération d'échantillons d'observation
103_1
Génération vecteurs de caractéristiques (T1)
Génération vecteurs de caractéristiques (T2)
Génération vecteurs de caractéristiques (T3)
103_2
103
Entraînement M1
Entraînement M2
Entraînement M3
104
M1
M2
M3
200
Collecte des données
201
Enrichissement des données
202
Génération d'échantillons d'observation
203_1
Génération vecteurs de caractéristiques (T1)
Génération vecteurs de caractéristiques (T2)
Génération vecteurs de caractéristiques (T3)
203_2
203
Détection M1
Détection M2
Détection M3
204
Décison 1
Décison 2
Décison 3
Anomalie détectée par M1,M2 ou M3 ?
205
oui
non
Pré-alerte
20
Combinaison pondérée des décisions M,M2,M3
208
Comparaison seuil pour déterminer décision finale
209
Décision fausse identifiée ?
210
oui
non
211
Notification correction
212
Ré-apprentissage des modèles M1,M2,M3
207
PHASE DE MISE EN PRODUCTION

## Description

Domaine technique :

L'invention se situe dans le domaine de la cybersécurité et de la surveillance des réseaux informatiques. Plus précisément, elle concerne les techniques de détection d'anomalies basées sur l'analyse du trafic dans un réseau.

Technique antérieure :

Il existe plusieurs approches pour la détection d'anomalies dans - les communications mises en œuvre dans un réseau.

Les approches basées sur les signatures utilisent des règles prédéfinies pour identifier les anomalies. Elles sont efficaces pour détecter les anomalies connues, mais ont des difficultés à détecter de nouvelles anomalies et nécessitent des mises à jour fréquentes des signatures.

Les approches basées sur le comportement modélisent le comportement normal du réseau et détectent les déviations. Elles peuvent détecter de nouvelles anomalies, mais sont sensibles aux faux positifs si le modèle de comportement normal n'est pas suffisamment précis.

Les approches par apprentissage par renforcement apprennent de manière interactive en recevant des récompenses. Elles ne nécessitent pas de données labellisées, mais peuvent avoir des difficultés à converger vers une politique optimale dans des environnements complexes.

Les analyses de séries temporelles exploitent la dimension temporelle du trafic pour détecter les anomalies. Le choix de l'échelle d'analyse (fenêtre de temps) et les techniques de filtrage du bruit sont des défis importants.

Il existe donc un besoin de détecter plus efficacement et rapidement les anomalies dans les communications réseau tout en évitant les fausses alarmes et en s'adaptant à la diversité et l'évolution des anomalies, ainsi qu'au besoin de contextualiser les événements pour une prise de décision pertinente.

Résumé de l'invention :

A cet effet, suivant un premier aspect, la présente invention décrit un procédé de détection d'anomalies dans les communications mises en œuvre dans un réseau, ledit procédé comprenant les étapes suivantes mises en œuvre par un dispositif électronique de surveillance des communications dans le réseau :

- collecter des données d'observation successives des communications ;
- effectuer une analyse multi-échelle de ces données d'observation collectées en exploitant lesdites données d'observations collectées sur chacune de N voies de traitement VTR1 ... VTRN, i = 1 à N, N≥2, comportant chacune un module de classification automatique des communications nommé Mi associé à une taille respective Ti de fenêtre d'observation, Ti ≠ Tj pour i ≠ j, en mettant en œuvre les étapes suivantes :

  pour chacune de fenêtres successives d'observation de taille Ti, un vecteur respectif de caractéristiques des communications est déterminé en fonction de celles des données d'observation collectées présentes sélectivement dans ladite fenêtre d'observation de taille Ti ;

  le vecteur de caractéristiques est fourni en entrée du module de classification automatique Mi et le modèle de classification Mi détermine, en fonction dudit vecteur de caractéristiques, un résultat de détection relatif à ladite fenêtre d'observation de taille Ti, indiquant si les communications survenues pendant ladite fenêtre d'observation de taille Ti comporte une anomalie ;

- déterminer qu'une anomalie est présente ou non à un instant donné en fonction des résultats de détection de chaque voie de traitement VTRi, i = 1 à N, relatif chacun à une fenêtre d'observation de taille Ti correspondant audit instant donné.

L'invention extrait des caractéristiques sur des fenêtres temporelles de différentes tailles, permettant ainsi de capturer les dynamiques à court et long terme des anomalies. Elle améliore la détection d'anomalies variées, elle tire parti des informations spécifiques à chaque niveau de granularité, ce qui produit une détection plus robuste et contextualisée.

Dans des modes de réalisation, un tel procédé comprendra en outre l'une au moins des caractéristiques suivantes :

- les étapes suivantes sont mises en œuvre par le dispositif de surveillance dans une phase préalable :

  collecter des données d'observation successives des communications ;

  en considérant une taille Ti fixée, i = 1 à N :

    déterminer des vecteurs de caractéristiques des communications, chaque vecteur étant déterminé en fonction des données d'observation sélectivement d'une fenêtre d'observation respective des communications, de taille Ti,

    effectuer un apprentissage automatique du module de classification Mi sur la base des vecteurs de caractéristiques des communications déterminés, de manière à ce qu'il détermine, en fonction d'un quelconque des vecteurs de caractéristiques des communications déterminés si le trafic ayant eu lieu pendant ladite fenêtre d'observation de taille Ti comporte une anomalie ;

- une anomalie est déterminée présente ou non à un instant donné en fonction de la combinaison desdits résultats de détection ;

- une anomalie est déterminée présente ou non à un instant donné en fonction de la combinaison desdits résultats de détection pondérés chacun en fonction d'un coefficient de pondération respectif ;

- une anomalie est déterminée présente ou non à un instant donné en fonction de la combinaison desdits résultats de détection pondérés chacun en fonction de la taille Ti relative de la fenêtre d'observation respective utilisée pour la détermination dudit résultat par le module de classification Mi. une anomalie étant déterminée présente ou non à un instant donné par comparaison, avec un seuil au moins, de la combinaison des N résultats de détection pondérés chacun en fonction de la taille relative de la fenêtre d'observation respective utilisée Ti pour la détermination dudit résultat ;

- une fenêtre d'observation de taille Ti étant considérée, il est calculé la moyenne, sur la fenêtre d'observation Ti, des résultats de détection de chaque module de classification Mj sur les fenêtres d'observation de taille Tj comprises dans ladite fenêtre d'observation de taille Ti,
  et il est déterminé la somme des termes suivants :

  la moyenne calculée par chaque module de classification Mj,

  le résultat de détection du module de classification Mi sur la fenêtre d'observation de taille Ti,

  le résultat de détection de chaque module de classification Mk sur la fenêtre d'observation de taille Tk comprenant ladite fenêtre d'observation de taille Ti, chacun desdits termes étant pondéré par un coefficient de pondération respectif affecté à chaque module de classification Mi, Mj, Mk.

Suivant un autre aspect, l'invention décrit un dispositif électronique de surveillance des communications dans un réseau, ledit dispositif étant adapté pour collecter des données d'observation successives des communications et pour effectuer une analyse multi-échelle de ces données d'observation collectées en exploitant lesdites données d'observations collectées sur chacune de N voies de traitement VTR1 ... VTRN, i = 1 à N, N≥2,

chaque voie de traitement VTRi, i = 1 à N, N≥2, du dispositif comportant un module de classification automatique des communications nommé Mi associé à une taille respective Ti de fenêtre d'observation, avec Ti ≠ Tj pour i,j = 1 à N et i ≠ j ;

ledit dispositif étant adapté pour déterminer, pour chacune de fenêtres successives d'observation de taille Ti, un vecteur respectif de caractéristiques des communications en fonction de celles des données d'observation collectées présentes sélectivement dans ladite fenêtre d'observation de taille Ti ;

ledit dispositif étant adapté pour fournir le vecteur de caractéristiques en entrée du module de classification automatique Mi, le modèle de classification Mi étant adapté pour déterminer, en fonction dudit vecteur de caractéristiques, un résultat de détection relatif à ladite fenêtre d'observation de taille Ti, indiquant si les communications survenues pendant ladite fenêtre d'observation de taille Ti comporte une anomalie ;

ledit dispositif étant adapté pour déterminer qu'une anomalie est présente ou non à un instant donné en fonction des résultats de détection de chaque voie de traitement VTRi, i = 1 à N, relatif chacun à une fenêtre d'observation de taille Ti correspondant audit instant donné.

Dans des modes de réalisation, un tel dispositif comprendra en outre l'une au moins des caractéristiques suivantes :

- le dispositif de surveillance est adapté pour déterminer qu'une une anomalie est présente ou non à un instant donné en fonction de la combinaison desdits résultats de détection ;
- le dispositif de surveillance est adapté pour déterminer qu'une une anomalie est présente ou non à un instant donné en fonction de la combinaison desdits résultats de détection pondérés chacun en fonction d'un coefficient de pondération respectif.

Suivant un autre aspect, l'invention décrit un produit programme d'ordinateur destiné à être stocké dans la mémoire d'un dispositif de surveillance de trafic et comprenant en outre un microcalculateur, ledit programme d'ordinateur comprenant des instructions qui, lorsqu'elles sont exécutées sur le microcalculateur, mettent en œuvre les étapes d'un procédé comme décrit auparavant.

L'invention décrit également un support d'enregistrement lisible par ordinateur stockant un tel programme d'ordinateur. De tels supports d'enregistrement peuvent comporter un moyen de stockage, tel qu'une ROM, par exemple un CD ROM ou une ROM de circuit microélectronique, ou encore un moyen d'enregistrement magnétique, par exemple une clé USB ou un disque dur. De tels supports d'enregistrement peuvent être des supports transmissibles tel qu'un signal électrique ou optique, qui peut être acheminé via un câble électrique ou optique, par radio ou par d'autres moyens, de sorte que le programme d'ordinateur qu'il contient est exécutable à distance. Les programmes selon l'invention peuvent être en particulier téléchargés sur un réseau par exemple le réseau Internet. De tels supports d'enregistrement peuvent comprendre un circuit intégré dans lequel le programme est incorporé, le circuit étant adapté pour exécuter ou pour être utilisé dans l'exécution du procédé de contrôle d'affichage précité.

Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple.

[Fig. 1] La figure 1 illustre l'impact de la taille des séries temporelles sur la détection d'anomalies ;

[Fig. 2] La figure 2 représente schématiquement un système de communication de données implémentant une solution de surveillance du trafic dans un mode de réalisation de l'invention ;

[Fig. 3] La figure 3 est un organigramme des étapes d'un procédé de détection d'anomalies dans un mode de réalisation de l'invention ;

[Fig. 4] La figure 4 est un chronogramme d'étapes d'un procédé de détection d'anomalies dans un mode de réalisation de l'invention ;

[Fig. 5] La figure 5 représente les logs pris en compte dans un échantillon dans un exemple de réalisation de l'invention.

Des références identiques peuvent être utilisées dans des figures différentes lorsqu'elles désignent des éléments identiques ou comparables.

Description détaillée :

Il est considéré à titre d'exemple d'un mode de réalisation de l'invention, un système de communication 1 représenté en figure 2, comportant un ensemble de terminaux utilisateurs 10 (téléphones mobiles, ordinateurs ...) adaptés pour échanger avec, par exemple les serveurs 30, d'un système de réservation en ligne d'hôtels, offrant les services de consultation des disponibilités, réservation de chambres, annulation/modification des réservations. Les communications réseau considérées sont par exemple les requêtes transmises depuis les terminaux utilisateurs à destination des ressources (serveurs), ainsi que les réponses à ces requêtes. Elles sont transmises sur des réseaux de communication comportant des liaisons de transport qui peuvent être de nature diverse : filaire, sans fil de type RadioFréquence ou autre. Les données échangées transitent, dans l'exemple considéré, par un module passerelle 20, par exemple de type passerelle API (acronyme de l'anglais 'Application Programming Interface', i.e. Interface de Programmation d'Application) qui analyse le trafic de données, en déduit des données d'observations du trafic et les transmet au dispositif de surveillance du trafic 40.

Dans le cas considéré, le dispositif de surveillance 40 est un dispositif électronique comportant notamment un module électronique de contrôle 44 et un module électronique d'apprentissage 50.

Ces données d'observations, qui décrivent les données de trafic échangées, comportent par exemple, dans le cas considéré, les logs enregistrant les requêtes entre utilisateurs et ressources. Dans des modes de réalisations, les données d'observation comportent, à la place, des paquets IP circulant sur le réseau, ou encore tout autre type de données décrivant les communications.

La figure 3 représente les étapes d'un procédé de détection d'anomalies dans les communications mises en œuvre par exemple dans le système de communication 1 dans un mode de réalisation de l'invention. Ce procédé comporte deux phases : une phase d'apprentissage 100 et une phase de mise en production 200, détaillées ci-dessous.

Phase d'apprentissage

La phase d'apprentissage 100 comporte une étape 101 de collecte des données décrivant les communications par le module de contrôle 44 par la passerelle 20, par exemple en temps réel depuis le réseau ou bien extraites d'une base d'historique enregistrée.

Dans le cas considéré où ces données sont de type logs, les informations spécifiques varient selon la méthode de logging (journalisation) employée, mais certains champs essentiels sont généralement présents, parmi lesquels les champs suivants :

- « Timestamp » : horodatage de la requête ;
- « Méthode http » : type de la requête (GET, POST, etc.) ;
- « Code statut http » : réponse du serveur (200, 404, etc.) ;
- « Durée de la requête » : temps pris par le serveur pour compléter la requête ;
- « Adresse IP du client » : adresse IP identifiant le client, i.e. le terminal utilisateur 10 ;
- « User-agent » : informations sur le navigateur ou l'outil utilisé par le client ;
- « Géolocalisation » : localisation géographique du client ;
- « Client ID » : identifiant unique pour chaque client ;
- « Request ID » : identifiant de la requête ;
- URL de la ressource demandée.

Des exemples de logs et du contenu de ces champs figurent dans le tableau qui suit.

[Table 1]

| Timestamp | Méthode HTTP | Code statut HTTP | Durée requête | IP client | User-agent | Géolocalisation | Client ID | URL (Endpoint) | Request ID |
|---|---|---|---|---|---|---|---|---|---|
| 1622146800 | GET | 200 | 250ms | 192.168.1.10 | Chrome/90.0 | Paris, FR | user123 | /api/ressource1 | req_abcdef123456 |
| 1622146805 | POST | 201 | 400ms | 192.168.1.11 | Firefox/88.0 | Lyon, FR | user456 | Api/ressource2 | req_lmnop345678 |

Dans le cas de l'utilisation de paquets IP, les champs de l'en-tête exploitables incluent :

- Adresses IP source et destination
- Numéros de port source et destination
- Protocole (TCP, UDP, ICMP...)
- Taille du paquet
- Flags (SYN, ACK, FIN...)
- TTL (Time-to-Live).

D'autres informations peuvent être extraites du payload (des données de « charge utile », i.e. les données à transmettre, pas les données d'en-tête, ni de contrôle, ni les metadata) s'il est non chiffré. De plus, dans un mode de réalisation, le temps de capture est enregistré au moment de la capture du paquet, ce qui est utile notamment quand l'en-tête du paquet ne comporte pas de champ d'horodatage.

Toujours en référence à la figure 3, dans une étape optionnelle 102 mise en œuvre par le module de contrôle 44, ces données d'observation sont pré-traitées et enrichies à l'aide d'informations d'expertise métier par exemple, en ajoutant des champs tels que :

- fonction de la ressource 30 (par exemple dans le cas du service considéré ici : recherche, réservation...)
- rôle de l'utilisateur du terminal utilisateur 10 (ici par exemple particulier, agence...)
- famille de méthode HTTP (lire, écrire...)
- famille de code statut (succès, erreur client, erreur serveur...)

Des exemples de logs enrichis figurent dans le tableau qui suit.

[Table 2]

| Times tamp | Mét hod e HTT P | Co de sta tut HT TP | Dur ée req uêt e | IP client | User- agent | Géoloc alisatio n | Clie nt ID | Request ID | Endpoint -URL | Foncti on endpoi nt | Rôle utilisat eur | Fam ille mét hod e | Fa mill e stat ut |
|---|---|---|---|---|---|---|---|---|---|---|---|---|---|
| 16221 46800 | GET | 20 0 | 250 ms | 192.16 8.1.10 | Chrom e/90.0 | Paris, FR | use r12 3 | req_abcd ef123456 | https://plmlatex.math.cnrs.fr /1544293832yzfvbvfyrynr | Reche rche d'hôtel s | individ ual | Lire | Suc cès |
| 16221 46805 | PO ST | 20 1 | 400 ms | 192.16 8.1.11 | Firefox /88.0 | Lyon, FR | use r45 6 | req_ghijk 789012 | /api/bookings | Réser vation s | travel Agenc y | Écrir e | Suc cès |

Ensuite, dans une étape 103, ces données d'observations éventuellement enrichies sont exploitées afin d'en extraire des vecteurs de caractéristiques qui seront utilisés en tant qu'entrées d'algorithmes d'apprentissage machine.
Dans un mode de réalisation, dans une sous-étape 103_1, des échantillons d'observation sont d'abord générés.
Pour cela, les données d'observation relatives à un même intervalle de temps de durée Te, sont regroupées entre elles de manière à générer un échantillon d'observations. La fréquence Fe = 1/Te rythmant ce regroupement, qu'on appelle ci-dessous fréquence d'échantillonnage, est choisie selon un ou plusieurs critères par exemple tels que :

- fréquence moyenne des requêtes ;
- exigences de détection : une fréquence suffisante pour détecter rapidement les anomalies ;
- contraintes de stockage et traitement, pour un équilibre entre granularité et coûts.

Chaque échantillon est ensuite décrit par des caractéristiques statistiques calculées par le module de contrôle 44 à partir des données d'observation regroupées sur l'intervalle de temps Te pour générer cet échantillon, telles que :

- métrique(s) de fréquence et ratio : fréquence absolue, relative, ratios...
- métrique(s) de diversité : valeurs distinctes, entropie, indices de Gini/Simpson...
- métrique(s) de tendance centrale et dispersion : quartiles, écart interquartile, moyenne tronquée...
- métrique(s) de forme de distribution : asymétrie, kurtosis...

Les définitions et utilités de telles métriques sont bien connues. Toutes ces métriques ne s'appliquent pas à tous les champs selon leur nature catégorielle ou continue.
A titre d'exemple, les caractéristiques statistiques suivantes sont calculées pour un échantillon de logs sur Te=10 secondes, déterminé pour l'instant de calcul t (donc calculé sélectivement sur les logs dont le timestamp est dans la plage t et t+Te) :

- nombre de requêtes (dans la plage t et t+Te)
- proportion de chaque méthode HTTP
- quartiles des durées de requêtes
- entropie des codes statut
- coefficient d'asymétrie de la distribution des tailles de requêtes.

En considérant cette fois les paquets IP, par exemple, les caractéristiques statistiques suivantes sont calculées pour un échantillon de paquets sur Te=10 secondes (s), déterminé pour l'instant de calcul t (donc calculé sélectivement sur les paquets capturés dans la plage t et t+Te) :

- nombre de paquets
- taille moyenne des paquets
- ratio paquets entrants/sortants
- 90ème percentile du temps inter-arrivées
- proportion de paquets avec flag SYN.

Le module de contrôle 44 obtient ainsi un vecteur de caractéristiques par échantillon.
Un exemple de vecteur de caractéristiques par échantillon est donné dans le tableau ci-dessous dans le cas des logs :

[Table 3]

| Timestamp début | Nb requêtes | % GET | % POST | Q1 durée | Médiane durée | Q3 durée | Entropie codes | Asymétrie tailles |
|---|---|---|---|---|---|---|---|---|
| 1622146800 | 215 | 0.72 | 0.28 | 120ms | 230ms | 410ms | 1.28 | 1.42 |

Un exemple de vecteur de caractéristiques par échantillon est donné dans le tableau ci-dessous dans le cas des paquets IP :

[Table 4]

| Timestamp début | Nb paquets | Taille moy. | Ratio in/out | 90p inter-arrivées | % SYN |
|---|---|---|---|---|---|
| 1622146800 | 12450 | 782 octets | 1.32 | 15ms | 0.03 |

Dans une étape 103_2, des vecteurs de caractéristiques pour chaque fenêtre d'observation de taille Ti, i = 1 à N, cette fois, sont calculés à partir de ces vecteurs caractéristiques par échantillon. On considère dans ce qui suit N= 3, mais bien sûr une valeur quelconque de N supérieure à 2 peut être choisie, par exemple N supérieur ou égal à 3.

La taille Ti d'une fenêtre d'observation définit la granularité de la détection.

Dans un mode de réalisation, on considère que :

- T1 = 20 s,
- T2 = 60 s,
- T3 = 120 s.

En considérant une taille Ti donnée, pour chaque fenêtre d'observation de taille Ti se succédant dans le temps, un vecteur de caractéristiques caractérisant spécifiquement le trafic pendant la fenêtre d'observation considérée est déterminé en fonction des vecteurs de caractéristiques des échantillons se trouvant dans cette fenêtre d'observation. Ainsi une fenêtre d'observation de taille T1 comporte n1=2 échantillons, une fenêtre d'observation de taille T2 comporte n2= 6 échantillons et une fenêtre d'observation de taille T3 comporte n3= 12 échantillons.

Dans le mode de réalisation considéré, les vecteurs de caractéristiques pour une fenêtre d'observation de taille Ti sont obtenus par le bloc de contrôle 44 en agrégeant entre eux les $n_i$ vecteur de caractéristiques des $n_i$ échantillons dans la fenêtre, ce qui revient à créer des séries temporelles de différentes tailles, ce qui revient à fournir en entrée de chacune de trois voies de traitement parallèles VT1, VT2, VT3, les vecteurs de caractéristiques d'échantillons, chaque voie en agrégeant le nombre $n_i$.

Au cours de la phase d'apprentissage, pour un ensemble de données d'observation de trafic (logs ou paquets IP) dédiées à l'apprentissage, un ensemble de vecteurs de caractéristiques pour chaque taille de fenêtre d'observation est ainsi constitué. Le nombre d'échantillons minimum nécessaires pour l'apprentissage dépend de plusieurs facteurs, notamment du type de modèle. Pour des modèles simples (par exemple, régression linéaire ou arbre de décision basique), quelques centaines d'échantillons peuvent suffire. En revanche, pour des modèles plus complexes, tels que les réseaux de neurones profonds, un nombre plus élevé de données est requis (par exemple un ou plusieurs milliers). Une règle empirique pour l'apprentissage profond (« deep learning ») consiste à avoir 10 fois plus d'exemples que le nombre de paramètres du modèle. Par exemple, si un modèle possède 10 000 paramètres, disposer d'au moins 100 000 échantillons d'apprentissage peut être un bon point de départ.

Puis, dans une étape 104, le module d'apprentissage 50 est adapté pour exécuter un algorithme d'apprentissage automatique, supervisé ou non, d'un modèle d'intelligence artificielle Mi, i = 1 à N (N=3 dans le cas considéré) qui, pour un vecteur de caractéristiques quelconque de l'ensemble dédié à l'apprentissage caractérisant une fenêtre d'observation de taille Ti, apprend au modèle Mi à déterminer si le trafic observé sur cette fenêtre comporte une anomalie. La détection d'anomalies est formulée ici comme un problème de classification.

Le but de l'apprentissage automatique est de permettre aux modèles de générer des décisions basées sur les données d'entrée, sans avoir besoin de règles explicites. Ce processus s'améliore à mesure que le modèle est exposé à plus de données. Plusieurs approches peuvent être utilisées, selon la disponibilité des données : l'apprentissage supervisé, qui utilise des données étiquetées, inclut des méthodes telles que la régression linéaire ou les machines à vecteurs de support (SVM). En l'absence de données étiquetées, on peut recourir à l'apprentissage non supervisé, avec des exemples tels que les techniques de clustering et les auto-encodeurs. L'apprentissage semi-supervisé combine ces deux approches lorsqu'il y a très peu de données étiquetées. Le deep learning devient particulièrement pertinent en présence de grands volumes de données.

A l'issue de l'apprentissage 104, un modèle d'intelligence artificielle Mi est ainsi obtenu pour chaque taille Ti de fenêtre d'observation : un module de détection d'anomalie 4i implémentant le modèle Mi (typiquement une mémoire stockant les données de définition du modèle et un processeur apte à exécuter le modèle défini dans la mémoire) est intégré dans le dispositif de surveillance 40, et la phase de mise en production 200 est alors déclenchée.

Phase de mise en production

Lors de la phase de production, 200, des étapes 201, 202 similaires aux étapes 101, 102 sont mises en œuvre par le module de contrôle 44 sur des données d'observation qui sont reçues en temps réel et en continu depuis la passerelle 20.

Une étape 203 similaire à l'étape 103 est ensuite effectuée par le bloc de contrôle 44 à partir de ces données temps réel collectées, éventuellement enrichies, et en considérant trois voies de traitement TRi, i = 1 à 3 : il est généré, par exemple en parallèle, en continu, pour chaque fenêtre d'observation de taille Ti successive du trafic, sur chaque voie de traitement TRi, un vecteur de caractéristiques statistiques caractérisant le trafic sélectivement survenu pendant cette fenêtre d'observation de taille Ti.

Dans une étape 204, le vecteur de caractéristiques statistiques caractérisant le trafic survenu pendant cette fenêtre d'observation de taille Ti est fourni en entrée du module de détection 4i, et donc en entrée du modèle Mi, qui détermine en fonction sélectivement de ce vecteur, si la fenêtre d'observation de taille Ti comporte une anomalie ou non (décision i).

En figure 4 sont représentées les fenêtres successives d'observation des données de trafic de différentes tailles Ti, la classification pour chaque fenêtre par le modèle Mi se soldant par une décision « Décision i », de présence ou d'absence d'anomalies sur la fenêtre.

Dans une étape 205 le bloc de contrôle 44 analyse les décisions fournies en sortie de chaque modèle et dans le cas où une détection d'anomalie a été positive relativement à un intervalle de temps (une anomalie a été détectée), dans une étape 206, il déclenche l'envoi d'une pré-alerte (i.e. dès qu'une décision signale une anomalie, une pré-alerte concernant l'échantillon classé comme anomalie est immédiatement envoyée, et ce sans attendre les décisions des autres modèles relativement à leurs fenêtres d'observation correspondant à cet intervalle de temps) ; suivant les modes de réalisation et en fonction par exemple du modèle Mi à l'origine de la détection positive, suite à la pré-alerte, il est déclenché des mesures de protection et/ou d'analyse de formes diverses par exemple : blocage -total ou partiel- du trafic, analyse plus fine du trafic par exemple en zoomant sur le trafic de l'utilisateur à l'origine du problème etc.

Chaque fenêtre de taille Ti est, dans l'exemple considéré, totalement "contenue" dans une fenêtre de taille Ti+1, i = 1, 2 de sorte que les données classifiées par un modèle Mi sont également évaluées par le modèle Mi+1 opérant sur une taille de fenêtre d'observation supérieure, ainsi que d'autres données supplémentaires.

Le bloc de contrôle 44 est adapté pour, dans un ensemble 207 d'étapes résoudre les décisions contradictoires et pour déterminer, pour chaque fenêtre d'observation ou au moins certaines de ces fenêtres, une décision en fonction des différentes décisions rendues par les trois modèles M1, M2, M3, par exemple par combinaison pondérée.

Lorsqu'un modèle entraîné sur une fenêtre d'observation de taille plus petite rend une décision (par exemple, il détecte une anomalie et déclenche une pré-alerte), cette décision peut être remise en question par les modèles entraînés sur des fenêtres d'observation plus grandes, qui disposent d'un contexte temporel plus large. De même, ces derniers prennent en compte les décisions des modèles entraînés sur des fenêtres d'observation plus petites pour ajuster leurs propres décisions.

Pour gérer ces conflits potentiels, dans un mode de réalisation, une correction a posteriori des décisions est mise en place. La fréquence de cette correction peut être choisie en fonction des besoins et des contraintes du système 1 de façon à offrir un équilibre entre réactivité et stabilité, en permettant une révision périodique des décisions tout en évitant des changements trop fréquents qui pourraient perturber le système. Par exemple, la correction peut avoir lieu après chaque décision du modèle entraîné sur la plus grande série temporelle (modèle M3) (la fréquence égale à l'inverse de la taille la plus grande TN) ou à une fréquence inférieure). Dans un mode de réalisation, le bloc de contrôle 44 est adapté pour sélectionner la fréquence de la correction parmi plusieurs fréquences fixées en fonction des besoins et des contraintes du système 1.

Lors de cette correction, dans une étape 208, les décisions de tous les modèles "inclus" dans la plus grande série temporelle sont combinées par le bloc de contrôle 44 de manière pondérée pour chaque fenêtre de temps correspondante. Les poids attribués à chaque modèle peuvent dépendre dans un mode de réalisation, de leur pertinence et de leur fiabilité, déterminées lors de la phase d'apprentissage.

Dans une étape 209, un seuil de confiance est ensuite appliqué par le bloc de contrôle 44 à la décision combinée pour déterminer la décision finale (seuil déterminé de façon empirique). Si la décision combinée indique qu'il y a eu une fausse détection d'anomalie (faux positif, ou faux négatif) et qu'elle avait été précédemment signalée via une pré-alerte (cas de faux positif) par un modèle à plus petite échelle (test étape 210), ou à l'inverse, si aucune pré-alerte n'avait été envoyée alors qu'elle aurait dû l'être (cas de faux négatif), une notification de correction est émise pour informer les parties prenantes de cette révision, dans une étape 211.

Dans une étape 212 (optionnelle), des décisions des modèles contredites par la décision finale (combinée), correspondant aux fausses alarmes et faux négatifs sont sélectionnées : elles donnent lieu (éventuellement après comparaison avec des seuils, comme décrit ci-après), à un stockage des vecteurs caractéristiques et des décisions corrigées correspondantes, dans une base de données, qui sera ensuite utilisée pour le réapprentissage continu des modèles, de manière périodique ou non.

Un exemple de réalisation de cet ensemble 207 d'étapes est décrit ci-après, en considérant 3 modèles entraînés M1, M2, M3, une valeur d'intervalle de temps par échantillon de Te=10 s, et des fenêtres d'observation de taille respective T1 = 20 s pour M1, T2 = 60 s pour M2 et T3 = 120 s pour M3.

Il est considéré les coefficients de pondération suivants pour les décisions des modèles, en fonction de leur taille de fenêtre d'observation : 0.1 pour les décisions issues de M1, 0.3 pour les décisions issues de M2 et 0.6 pour les décisions issues de M1.

Les décisions prises par les 3 modèles en considérant une observation s'écoulant sur 12 fenêtres successives de taille T1 (t_1 à t_12), avant correction, sont indiquées dans le tableau ci-dessous, dans lequel « 1 » indique une décision indiquant une détection d'anomalie et « 0 » indique qu'aucune anomalie n'a été détectée (cas particulier d'une classification de type binaire) :

[table 5]

<table>
<tr><td>t_1</td><td>t_2</td><td>t_3</td><td>t_4</td><td>t_5</td><td>t_6</td><td>t_7</td><td>t_8</td><td>t_9</td><td>t_10</td><td>t_11</td><td>t_12</td><td></td></tr>
<tr><td>0</td><td>0</td><td>1</td><td>1</td><td>1</td><td>0</td><td>1</td><td>1</td><td>1</td><td>1</td><td>0</td><td>0</td><td>Décisions 1 (par M1)</td></tr>
<tr><td colspan="3">0</td><td colspan="3">0</td><td colspan="3">0</td><td colspan="3">1</td><td>Décisions 2 (par M2)</td></tr>
<tr><td colspan="6">0</td><td colspan="6">1</td><td>Décisions 3 (par M3)</td></tr>
</table>

Le modèle M1 délivre une décision (Décision 1) à l'issue de chaque t_n, n= 1 à 12 indiquant la présence ou non d'une anomalie sur la fenêtre t_n ; le modèle M2 délivre une décision (Décision 2) à l'issue de chaque séquence débutant à t_3n+1 et s'achevant à t_3n+3, n= 0 à 3 indiquant la présence ou non d'une anomalie sur la séquence ; le modèle M3 délivre une décision (Décision 3) à l'issue de chaque séquence débutant à t_6n+1 et s'achevant à t_6n+6, n= 0, 1 indiquant la présence ou non d'une anomalie sur la séquence.

Correction des décisions du modèle M1 :

Dans l'exemple, pour corriger les décisions du modèle M1 à la fin de la période t_6 (de même à la fin de t_12), on calcule la moyenne pondérée des décisions des trois modèles pour chaque fenêtre de temps t_n, n = 1 à 12. La décision prise par un modèle de taille de fenêtre d'observation plus grande comportant l'instant considéré t_n est affectée à t_n.

Prenons quelques fenêtres de temps t_i pour illustrer cela :

$$\text{Pour t_1 : } (0 \times 0{,}1) + (0 \times 0{,}3) + (0 \times 0{,}6) = 0$$

$$\text{Pour t_3 : } (1 \times 0{,}1) + (0 \times 0{,}3) + (0 \times 0{,}6) = 0{,}1$$

$$\text{Pour t_7 : } (1 \times 0{,}1) + (0 \times 0{,}3) + (1 \times 0{,}6) = 0{,}7$$

$$\text{Pour t_11 : } (0 \times 0{,}1) + (1 \times 0{,}3) + (1 \times 0{,}6) = 0{,}9$$

Ainsi, si la moyenne pondérée est supérieure ou égale à un seuil, par exemple 0,8, il est considéré par le module de contrôle 44 qu'il y a une anomalie sur la fenêtre t_n. Sinon, on considère que le trafic est normal.

[table 6]

| t_1 | t_2 | t_3 | t_4 | t_5 | t6 | t_7 | t_8 | t_9 | t_10 | t_11 | t_12 | |
|---|---|---|---|---|---|---|---|---|---|---|---|---|
| 0 | 0 | 0.1 | 0.1 | 0.1 | 0 | 0.7 | 0.7 | 0.7 | 1 | 0.9 | 0.9 | Moyenne pondérée sur chaque t_n |

(suite)

| t_1 | t_2 | t_3 | t_4 | t_5 | t6 | t_7 | t_8 | t_9 | t_10 | t_11 | t_12 | |
|---|---|---|---|---|---|---|---|---|---|---|---|---|
| 0 | 0 | **1** | **1** | **1** | 0 | **1** | **1** | **1** | 1 | **0** | **0** | Décisions 1 (à corriger **en gras**) |
| 0 | | | 0 | | | 0 | | | 1 | | | Décisions 2 |
| 0 | | | | | | **1** | | | | | | Décisions 3 |

Le tableau ci-dessus indique les résultats des moyennes pondérées et, en gras, les décisions de M1 qui sont à corriger, correspondant aux faux positifs et faux négatifs (celles relatives à t_3, t_4, t_5, t_7, t_8, t_9, t_11, t_12).

Dans un mode de réalisation, parmi ces fausses décisions (les faux positifs et faux négatifs), le module de contrôle 44 sélectionne celles à réinjecter (étape 212) dans la mise à jour d'apprentissage du modèle M1, par exemple seules celles correspondant à une anomalie avec une moyenne pondérée ≥ 0,9 ou infirmée avec une moyenne pondérée ≤ 0,03 (cases grisées dans le tableau 6, correspondant aux fenêtres t_11, t_12).

<u>Correction des décisions du modèle M 2 :</u>

Pour corriger les décisions du modèle M2 à la fin de la période t_6, le module de contrôle 44 prend aussi en compte les décisions de M1 et M3 : il calcule la moyenne pondérée des décisions sur des fenêtres de taille T2, comportant 3 périodes T1 (car le modèle 2 a une taille de fenêtre T2 de 3 × T1), i.e comportant une moitié de période T3.

Si la moyenne pondérée est supérieure ou égale à un seuil, par exemple 0,8, il est considéré par le module de contrôle 44 qu'il y a une anomalie sur la fenêtre de taille T2 considérée. Sinon, il considère que le trafic est normal.

Par exemple, pour la fenêtre allant de t_1 à t_3, la moyenne des décisions de M1 est déterminée puis pondérée par 0.1, la décision de M2 est pondérée par 0.3 et la décision de M3 sur la période T3 comportant la fenêtre t_1 à t_6 est pondérée par 0.6 :

Par exemple, pour la fenêtre de taille T2 allant de t_1 à t_3 : $(1/3 \times 0,1) + (0 \times 0,3) + (0 \times 0,6) = 0,03$

De même, pour la fenêtre de taille T2 allant de t_4 à t_6 :

$$(2/3 \times 0,1) + (0 \times 0,3) + (0 \times 0,6) = 0,06 ;$$

[table 7]

| **t_1** | **t_2** | **t_3** | **t_4** | **t_5** | **t_6** | **t_7** | **t_8** | **t_9** | **t_10** | **t_11** | **t_12** | |
|---|---|---|---|---|---|---|---|---|---|---|---|---|
| **0** | **0** | **1** | **1** | **1** | **0** | **1** | **1** | **1** | **1** | **0** | **0** | **Décisions 1** |
| **0,03** | | | **0.06** | | | **0.7** | | | **0.903** | | | **Moyennes décisions 2** |
| **0** | | | **0** | | | **0** | | | **1** | | | **Décisions 2 (à corriger en gras)** |
| **0** | | | | | | **1** | | | | | | **Décisions 3** |

Le tableau ci-dessus indique les résultats des moyennes pondérées et, en gras, les décisions de M2 qui sont à corriger, correspondant aux faux positifs et faux négatifs : dans le cas présent, aucune décision n'est à corriger.

Dans un mode de réalisation, parmi ces fausses décisions (les faux positifs et faux négatifs), le module de contrôle 44 sélectionne celles à réinjecter (étape 212) dans la mise à jour d'apprentissage du modèle M2, par exemple seuls celles correspondant à une anomalie avec une moyenne pondérée ≥ 0,9 ou infirmée avec une moyenne pondérée ≤ 0,03 (dans l'exemple du tableau 7, aucune fausse décision de M2 ; a fortiori, aucune fausse décision à réinjecter).

<u>Correction des décisions du modèle M3 :</u>

De même, pour corriger la décision du modèle M3 à la fin de la période t_6 et relative à la fenêtre d'observation de taille T3 débutant à t_1 et s'achevant à t_6, on calcule la moyenne pondérée des décisions sur cette fenêtre d'observation (car le modèle 3 a une taille de fenêtre de 6 × T1) : la moyenne des décisions de M1 est déterminée, puis pondérée par 0.1, la moyenne des décisions de M2 est déterminée puis est pondérée par 0.3 et la décision de M3 sur la période T3 comportant la fenêtre t_1 à t_6 est pondérée par 0.6 :

Par exemple, pour la fenêtre d'observation de taille T3, sur les périodes t_1 à t_6 :

$$(3/6 \times 0{,}1) + (0 \times 0{,}3) + (0 \times 0{,}6) = 0{,}05$$

[table 8]

| t_1 | t_2 | t_3 | t_4 | t_5 | t_6 | t_7 | t_8 | t_9 | t_10 | t_11 | t_12 | |
|---|---|---|---|---|---|---|---|---|---|---|---|---|
| 0 | 0 | 1 | 1 | 1 | 0 | 1 | 1 | 1 | 1 | 0 | 0 | **Décisions 1** |
| 0 | | | 0 | | | 0 | | | 1 | | | **Décisions 2** |
| 0.05 | | | | | | 0.81 | | | | | | **Moyennes décisions 3** |
| 0 | | | | | | 1 | | | | | | **Décisions 3 (en gras : à corriger)** |

Le tableau ci-dessus indique les résultats des moyennes pondérées et, en gras, les décisions de M3 qui sont à corriger, correspondant aux faux positifs et faux négatifs : dans le cas présent, aucune décision n'est à corriger.

Dans un mode de réalisation, parmi ces fausses décisions, le module de contrôle 44 sélectionne celles à réinjecter (étape 212) dans la mise à jour d'apprentissage du modèle M3, par exemple seules celles correspondant à une anomalie avec une moyenne pondérée ≥ 0,9 ou infirmée avec une moyenne pondérée ≤ 0,03 (dans l'exemple du tableau 8, pas de fausses décisions, a fortiori pas de fausses décisions à réinjecter en apprentissage de M3).

En résumé, cette invention permet une détection d'anomalies réseau précise et réactive, tirant parti d'une approche multi-échelle pour adapter la granularité et le contexte, et d'un mécanisme de correction des décisions exploitant les bénéfices des différentes échelles de temps.

On notera que les valeurs de seuils indiquées ci-dessus le sont uniquement à titre d'exemples ; d'autres valeurs peuvent être utilisées ; elles peuvent être déterminées de façon empirique.

Dans l'exemple décrit ci-dessus, le dispositif de surveillance du trafic 40 mettait en œuvre les phases d'apprentissage 100 et de mise en production 200. Dans un autre mode de réalisation, des modules distincts effectuent les étapes de ces phases respectives.

La figure 1 illustre l'impact de la taille de la fenêtre d'observation sur la détection d'anomalies et la réduction des fausses alarmes. Elle représente l'évolution du nombre de requêtes R (en ordonnée) au fil du temps t (en abscisse). L'échantillon entouré sur lequel pointe une flèche pourrait être détecté comme anomalie dans le cas où les nombres de requêtes sont comparés localement (petite fenêtre d'observation) ; cependant avec une vue plus globale (fenêtre d'observation plus grande), il peut être considéré que c'est un comportement normal, le même motif étant répété à la période suivante.

Dans l'exemple qui précède, il a été considéré des modèles d'apprentissage automatique adaptés pour classer les échantillons en normal/anormal ; dans d'autres modes de réalisation, les classifications sont plus raffinées et trient par exemple en outre les anomalies en fonction du type d'anomalie (c'est-à-dire avec plus de deux classes, par exemple : « comportement normal », « anomalie de type 1 », « anomalie de type 2 », etc.) , par exemple « Man in the Middle », « Cross-Site Scripting », « Déni de service », etc.

L'invention propose ainsi un procédé de détection efficace des anomalies dans les communications réseau, en exploitant, à chaque instant de détection, des caractéristiques statistiques calculées sur des fenêtres temporelles de différentes tailles, permettant ainsi de capturer les dynamiques à court et long terme des anomalies. Cela améliore la détection d'anomalies variées, qu'elles soient soudaines ou progressives. Les fenêtres courtes offrent une détection rapide et localisée des anomalies soudaines, mais peuvent être sujettes aux faux positifs et ne pas détecter les anomalies à développement lent. À l'inverse, les fenêtres longues sont plus robustes aux variations normales et sont capables de détecter les anomalies progressives, mais au prix d'une réactivité et d'une granularité réduites, les anomalies de courte durée pouvant être masquées.

Dans des modes de réalisation, la solution selon l'invention comprend l'entraînement des modèles de classification du trafic en normal ou anormal, qui sont spécialisés chacun à des échelles de temps différentes, ce qui tire parti des informations de contexte spécifiques à chaque niveau de granularité. Leur combinaison pondérée par leur contexte temporel produit une détection plus robuste, rapide et contextualisée.

Dans des modes de réalisation, les décisions de détection sont corrigées a posteriori en exploitant les décisions des modèles entraînés sur des fenêtres de différentes tailles, ce qui permet d'invalider certaines anomalies détectées et de réduire les fausses alarmes.

Les faux positifs et faux négatifs sont réinjectés pour un réapprentissage continu, permettant aux modèles de s'améliorer constamment.

Les applications sont nombreuses : à titre d'exemples, on cite la supervision et la sécurité des systèmes d'information d'entreprises, la protection d'infrastructures critiques et de systèmes industriels, la détection d'intrusions pour les fournisseurs de services et opérateurs télécoms, ainsi que la surveillance du trafic pour l'optimisation et le dimensionnement des réseaux. Au-delà de la détection d'attaques, elle peut également servir à identifier des dysfonctionnements, des causes de dégradations de performances ou des usages non optimaux de ressources réseau. Son caractère générique la rend aisément transposable à différents contextes applicatifs nécessitant une analyse fine et réactive des séries temporelles.

Dans ce qui précède, il a été considéré que les communications transitaient par un module passerelle 20. Dans d'autres modes de réalisation, l'invention est mise en œuvre sans module passerelle, avec un système de journalisation qui enregistre les données d'observation relatives aux communications ayant lieu dans le système entre utilisateurs et ressources. Suivant les modes de réalisations, les données de trafic considérées sont représentées par exemple sous forme de fichiers type PCAPs (de l'anglais « packet capture ») ou encore sous forme de logs au niveau applicatif ou toute autre forme représentant les communications dans le réseau. trafic réseau, que l'on obtient simplement en capturant le trafic transitant entre utilisateurs et ressources, au niveau d'une sonde placée dans le réseau. Dans un mode de réalisation les observations sont obtenues en capturant le trafic transitant entre utilisateurs et ressources, au niveau d'une sonde placée dans le réseau.

Dans ce qui précède, il a été considéré des tailles pour les fenêtres d'observation ou encore pour rythmer la fabrication des échantillons, exprimées en temps. Dans un autre mode de réalisation, les tailles considérées sont exprimées en nombre de logs (ou de paquets IP).

Dans l'étape 103 décrite plus haut, des échantillons correspondant à 10 s ont été considérés, puis des vecteurs de caractéristiques calculés pour chacun de ces échantillons ont été sériés temporellement en nombre $n_i$ pour le modèle Mi, i = 1 à 3, pour générer les vecteurs de caractéristiques des fenêtres d'observation de taille Ti. Dans un autre mode de réalisation, à la place des échantillons de 10 s utilisés en parallèle sur chaque voie, il est considéré sur chaque voie VTi des échantillons regroupant les logs (ou paquets) sur une durée Ti, et les vecteurs de caractéristiques obtenus à partir de ces échantillons sont ceux correspondant à chaque taille Ti. Ainsi au lieu de réaliser un échantillonnage fixe, puis un regroupement multi-échelle pour créer des séries temporelles de tailles variables, des générations d'échantillons multi-échelle sont réalisées (qui reprend l'idée de séries temporelles multi-échelles). L'idée est ici de considérer plusieurs tailles d'échantillons dans les voies de traitement parallèles. La taille de l'échantillon peut être définie par le nombre d'observations, par exemple 3 logs/paquets, ou par une durée temporelle, comme tous les logs/paquets enregistrés pendant 10 secondes.

Une telle génération d'échantillon à plusieurs échelles consiste à "cumuler" les observations sur plusieurs niveaux. Par exemple, si on définit les échantillons de façon temporelle et qu'on considère trois niveaux d'échelles : à partir d'un instant t, une première échelle consiste à décrire toutes les observations (logs/paquets, etc.) passant pendant 20 secondes, soit entre t et t+20 s, une deuxième décrit les observations enregistrées pendant 60 secondes entre t et t+60 s, et une troisième, pendant 120 secondes, entre t et t+120s.

Exemple de construction de vecteur de caractéristiques d'un échantillon

En référence à la figure 5 décrivant les logs à regrouper dans un échantillon, les métriques de fréquence et de ratio suivantes sont calculées, en considérant les aspects « Méthode http » et « Code statut ».

**Fréquence absolue** :

**Méthode HTTP:**

GET: 3
POST: 2
PUT: 1
DELETE: 1

**Code statut:**

200: 3
201: 1
404: 1
204: 1
400: 1

**Fréquence relative (proportion)** :

**Méthode HTTP:**

GET: 3 / 7 = 0.429
POST: 2 / 7 = 0.286
PUT: 1 / 7 0.143
DELETE: 1 / 7 = 0.143

**Code statut:**

200: 3 / 7 = 0.429
201: 1 / 7 = 0.143
404: 1 / 7 = 0.143
204: 1 / 7 = 0.143
400: 1 / 7 = 0.143

**Ratio entre les deux valeurs les plus fréquentes** :

**Méthode HTTP:**
Ratio (GET / POST): 3 / 2 = 1.5

**Code statut:**
Ratio (200 / 201): 3 / 1 = 3.0

**Top N des valeurs les plus fréquentes** :

**Top 2 Méthode HTTP:**

GET: 3 occurrences
POST: 2 occurrences

**Top 2 Code statut:**

200: 3 occurrences
201: 1 occurrence (avec 404, 204, 400)

**Ratio de la valeur la plus fréquente**

**Méthode HTTP:**
Ratio (GET): 3 / 7 = 0.429

**Code statut:**
Ratio (200): 3 / 7 = 0.429

Les métriques de diversité suivantes sont calculées, pour ces aspects « Méthode http » et « Code de statut ».

**Méthode HTTP:**

Observations : GET, POST, PUT, DELETE, POST, GET

Fréquences : GET: 3, POST: 2, PUT: 1, DELETE: 1

Nombre total d’observations: 7

Nombre de valeurs distinctes : 4 (GET, POST, PUT, DELETE)

Ratio entre le nombre de valeurs distinctes et le nombre total d’observations :

4/7≈0.57174 47≈0.57

Entropie de Shannon : =1.842 bits

Indice de diversité de Simpson ≈0.653

Indice de Gini ≈0.653 ≈0.653 ≈0.653

**Code statut :**

Observations : 200, 201, 404, 200, 204, 400, 200
Fréquences : 200: 3, 201: 1, 404: 1, 204: 1, 400: 1
Nombre total d'observations : 7
Nombre de Nombre de valeurs distinctes : 5 (200, 201, 404, 204, 400)
Ratio entre le nombre de valeurs distinctes et le nombre total d'observations : 5/7 = 0.71475 ≈ 0.714

Entropie de Shannon ≈2.128 bits
Indice de diversité de Simpson ≈0.775
Indice de Gini ≈0.775

Le vecteur de caractéristiques comprend ainsi, pour l'aspect « Méthode http », les composantes suivantes :

1.Nombre total d'observations : 7
2.Fréquence absolue de GET : 3
3.Fréquence absolue de POST : 2
4.Fréquence absolue de PUT : 1
5.Fréquence absolue de DELETE : 1
6.Fréquence relative de GET : 0.429
7.Fréquence relative de POST : 0.286
8.Fréquence relative de PUT : 0.143
9.Fréquence relative de DELETE : 0.143
10.Ratio entre GET et POST : 1.5
11.Top 2 des méthodes les plus fréquentes : GET, POST
12.Ratio de la valeur la plus fréquente (GET) : 0.429
13.Nombre de valeurs distinctes : 4
14.Ratio de diversité : 0.571
15.Entropie de Shannon : 1.842 bits
16.Indice de diversité de Simpson : 0.653

Cette partie du vecteur de caractéristiques relative à l'aspect « Methode http » peut être ainsi représentée : HTTP_Features=[7,3,2,1,1,0.429,0.286,0.143,0.143,1.5,"GET,POST",0.429,4,0.571,1 .842,0.653,0.653]

Pour gérer une taille fixe de la partie "Fréquence absolue", qui peut varier en fonction des différentes valeurs prises par la méthode, on peut se limiter aux méthodes les plus courantes et les plus connues: GET, POST, PUT, HEAD etc.

Similairement, le vecteur de caractéristiques comprend ainsi, pour l'aspect « Code statut », les composantes suivantes :

1.Nombre total d'observations : 7

2.Fréquence absolue de 200 : 3

3.Fréquence absolue de 201 : 1

4.Fréquence absolue de 404 : 1

5.Fréquence absolue de 204 : 1

6.Fréquence absolue de 400 : 1

7.Fréquence relative de 200 : 0.429

8. Fréquence relative des autres (201, 404, 204, 400) : 0.143 chacun

9.Ratio entre 200 et 201 : 3.0

10.Top 2 des codes de statut : 200, 201

11.Ratio de la valeur la plus fréquente (200) : 0.429

12.Nombre de valeurs distinctes : 5

13.Ratio de diversité : 0.714

14.Entropie de Shannon : 2.128 bits

15.Indice de diversité de Simpson : 0.775

16.Indice de Gini : 0.775

Cette partie du vecteur de caractéristiques relative à l'aspect « code statut » peut être ainsi représentée : Status_Features=[7,3,1,1,1,1,0.429,0.143,0.143,0.143,0.143,3.0,"200,201",0.429,5,0.714,2.1 28,0.775,0.775]

La même considération que précédemment s'applique pour avoir une taille fixe.

Les étapes du procédé incombant au module de contrôle 44, respectivement le module d'apprentissage 50, peuvent être mises en œuvre par l'exécution d'instructions logicielles (mémorisées dans une mémoire du dispositif de surveillance 40) sur un processeur du dispositif de surveillance 40. Alternativement, elles peuvent être mises en œuvre par un hardware dédié, typiquement un circuit intégré numérique, soit spécifique (ASIC) ou basé sur une logique programmable (par exemple FPGA/Field Programmable Gate Array).

**Revendications**

**1.** Procédé de détection d'anomalies dans les communications mises en œuvre dans un réseau (1), ledit procédé comprenant les étapes suivantes mises en œuvre par un dispositif électronique de surveillance des communications (40) dans le réseau :

- collecter des données d'observation successives des communications ;
- effectuer une analyse multi-échelle de ces données d'observation collectées en exploitant lesdites données d'observations collectées sur chacune de N voies de traitement VTRi, i = 1 à N, N≥2, comportant chacune un module de classification automatique des communications nommé Mi (41, 42, 43) associé à une taille respective Ti de fenêtre d'observation, avec Ti ≠ Tj pour i,j = 1 à N et i ≠ j, en mettant en œuvre les étapes suivantes :

  pour chacune de fenêtres successives d'observation de taille Ti, un vecteur respectif de caractéristiques des communications est déterminé en fonction de celles des données d'observation collectées présentes sélectivement dans ladite fenêtre d'observation de taille Ti ;
  le vecteur de caractéristiques est fourni en entrée du module de classification automatique Mi (41, 42, 43) et le modèle de classification Mi détermine, en fonction dudit vecteur de caractéristiques, un résultat de détection relatif à ladite fenêtre d'observation de taille Ti, indiquant si les communications survenues pendant ladite fenêtre d'observation de taille Ti comporte une anomalie ;

- déterminer qu'une anomalie est présente ou non à un instant donné en fonction des résultats de détection de chaque voie de traitement VTRi, i = 1 à N, relatif chacun à une fenêtre d'observation de taille Ti correspondant audit instant donné.

**2.** Procédé de détection d'anomalies selon la revendication 1, selon lequel les étapes suivantes sont mises en œuvre par le dispositif de surveillance (40) dans une phase préalable :

- collecter des données d'observation successives des communications ;
- en considérant une taille Ti fixée, i = 1 à N :

déterminer des vecteurs de caractéristiques des communications, chaque vecteur étant déterminé en fonction des données d'observation sélectivement d'une fenêtre d'observation respective des communications, de taille Ti,
effectuer un apprentissage automatique du module de classification Mi sur la base des vecteurs de caractéristiques des communications déterminés, de manière à ce qu'il détermine, en fonction d'un quelconque des vecteurs de caractéristiques des communications déterminés si le trafic ayant eu lieu pendant ladite fenêtre d'observation de taille Ti comporte une anomalie.

**3.** Procédé de détection d'anomalies selon l'une quelconque des revendications précédentes, selon lequel une anomalie est déterminée présente ou non à un instant donné en fonction de la combinaison desdits résultats de détection.

**4.** Procédé de détection d'anomalies selon la revendication précédente, selon lequel une anomalie est déterminée présente ou non à un instant donné en fonction de la combinaison desdits résultats de détection pondérés chacun en fonction d'un coefficient de pondération respectif.

**5.** Procédé de détection d'anomalies selon la revendication précédente, selon lequel une anomalie est déterminée présente ou non à un instant donné en fonction de la combinaison desdits résultats de détection pondérés chacun en fonction de la taille Ti relative de la fenêtre d'observation respective utilisée pour la détermination dudit résultat par le module de classification Mi. une anomalie étant déterminée présente ou non à un instant donné par comparaison, avec un seuil au moins, de la combinaison des N résultats de détection pondérés chacun en fonction de la taille relative de la fenêtre d'observation respective utilisée Ti pour la détermination dudit résultat.

**6.** Procédé de détection d'anomalies selon l'une quelconque des revendications précédentes, selon lequel une fenêtre d'observation de taille Ti étant considérée, il est calculé la moyenne, sur la fenêtre d'observation Ti, des résultats de détection de chaque module de classification Mj sur les fenêtres d'observation de taille Tj comprises dans ladite fenêtre d'observation de taille Ti,
et il est déterminé la somme des termes suivants :

- la moyenne calculée par chaque module de classification Mj,
- le résultat de détection du module de classification Mi sur la fenêtre d'observation de taille Ti,
- le résultat de détection de chaque module de classification Mk sur la fenêtre d'observation de taille Tk comprenant ladite fenêtre d'observation de taille Ti,

chacun desdits termes étant pondéré par un coefficient de pondération respectif affecté à chaque module de classification Mi, Mj, Mk.

**7.** Programme d'ordinateur, destiné à être stocké dans la mémoire d'un dispositif de surveillance de trafic (40) et comprenant en outre un microcalculateur, ledit programme d'ordinateur comprenant des instructions qui, lorsqu'elles sont exécutées sur le microcalculateur, mettent en œuvre les étapes d'un procédé selon l'une des revendications précédentes.

**8.** Dispositif électronique de surveillance des communications (40) dans un réseau (1), ledit dispositif étant adapté pour collecter des données d'observation successives des communications et pour effectuer une analyse multi-échelle de ces données d'observation collectées en exploitant lesdites données d'observations collectées sur chacune de N voies de traitement VTR1 ... VTRN, i = 1 à N, $N \geq 2$,

chaque voie de traitement VTRi, i = 1 à N, $N \geq 2$, du dispositif comportant un module de classification automatique des communications nommé Mi (41, 42, 43) associé à une taille respective Ti de fenêtre d'observation, avec $Ti \neq Tj$ pour i,j = 1 à N et $i \neq j$ ;
ledit dispositif (40) étant adapté pour déterminer, pour chacune de fenêtres successives d'observation de taille Ti, un vecteur respectif de caractéristiques des communications en fonction de celles des données d'observation collectées présentes sélectivement dans ladite fenêtre d'observation de taille Ti ;
ledit dispositif (40) étant adapté pour fournir le vecteur de caractéristiques en entrée du module de classification automatique Mi, le modèle de classification Mi étant adapté pour déterminer, en fonction dudit vecteur de caractéristiques, un résultat de détection relatif à ladite fenêtre d'observation de taille Ti, indiquant si les communications survenues pendant ladite fenêtre d'observation de taille Ti comporte une anomalie ;
ledit dispositif (40) étant adapté pour déterminer qu'une anomalie est présente ou non à un instant donné en fonction des résultats de détection de chaque voie de traitement VTRi, i = 1 à N, relatif chacun à une fenêtre d'observation de taille Ti correspondant audit instant donné.

**9.** Dispositif électronique de surveillance des communications (40) selon la revendication 8, adapté pour déterminer qu'une une anomalie est présente ou non à un instant donné en fonction de la combinaison desdits résultats de détection.

**10.** Dispositif électronique de surveillance des communications (40) selon la revendication 9, adapté pour déterminer qu'une une anomalie est présente ou non à un instant donné en fonction de la combinaison desdits résultats de détection pondérés chacun en fonction d'un coefficient de pondération respectif.

[Fig. 1]

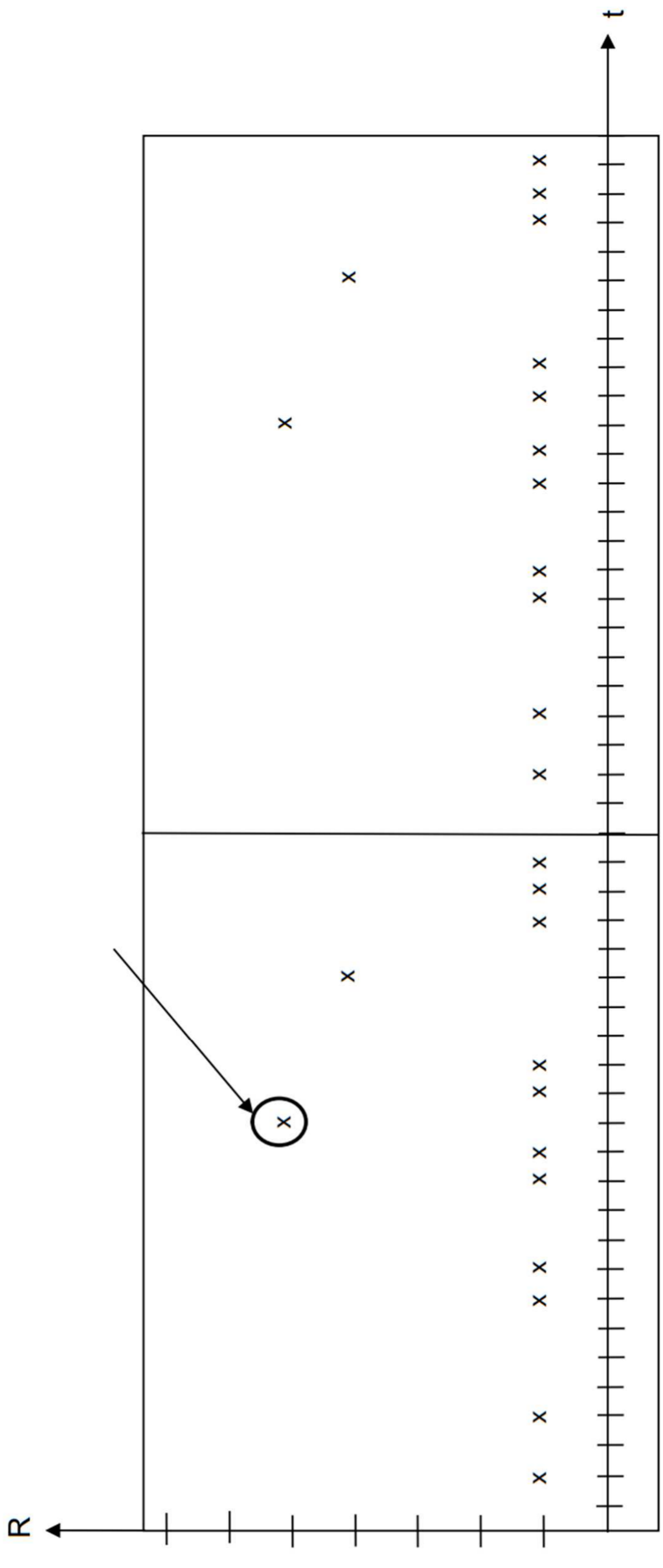

[Fig. 2]

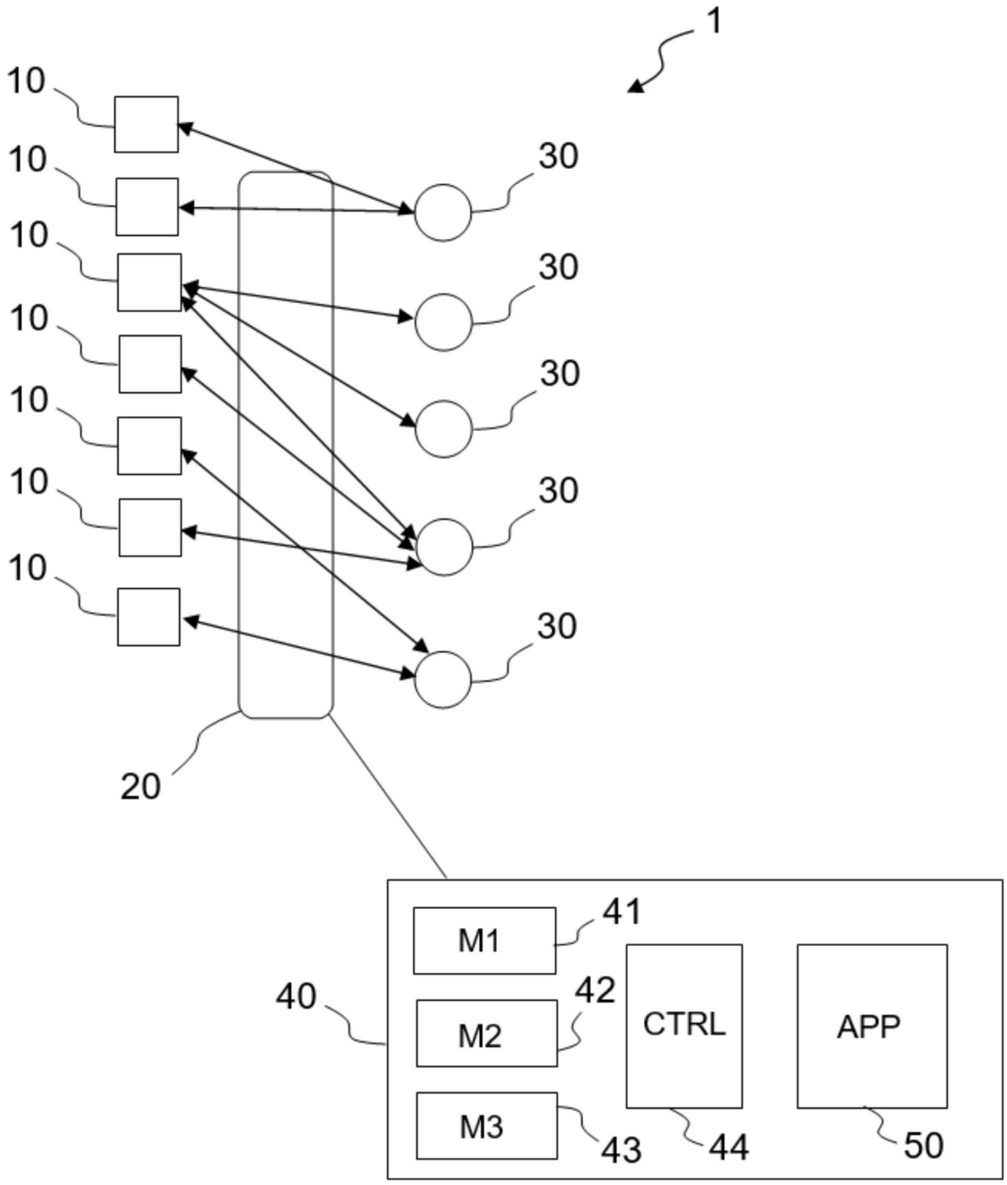
1
10
10
10
10
10
10
10
30
30
30
30
30
20
40
M1
M2
M3
41
42
43
CTRL
44
APP
50

[Fig. 3]

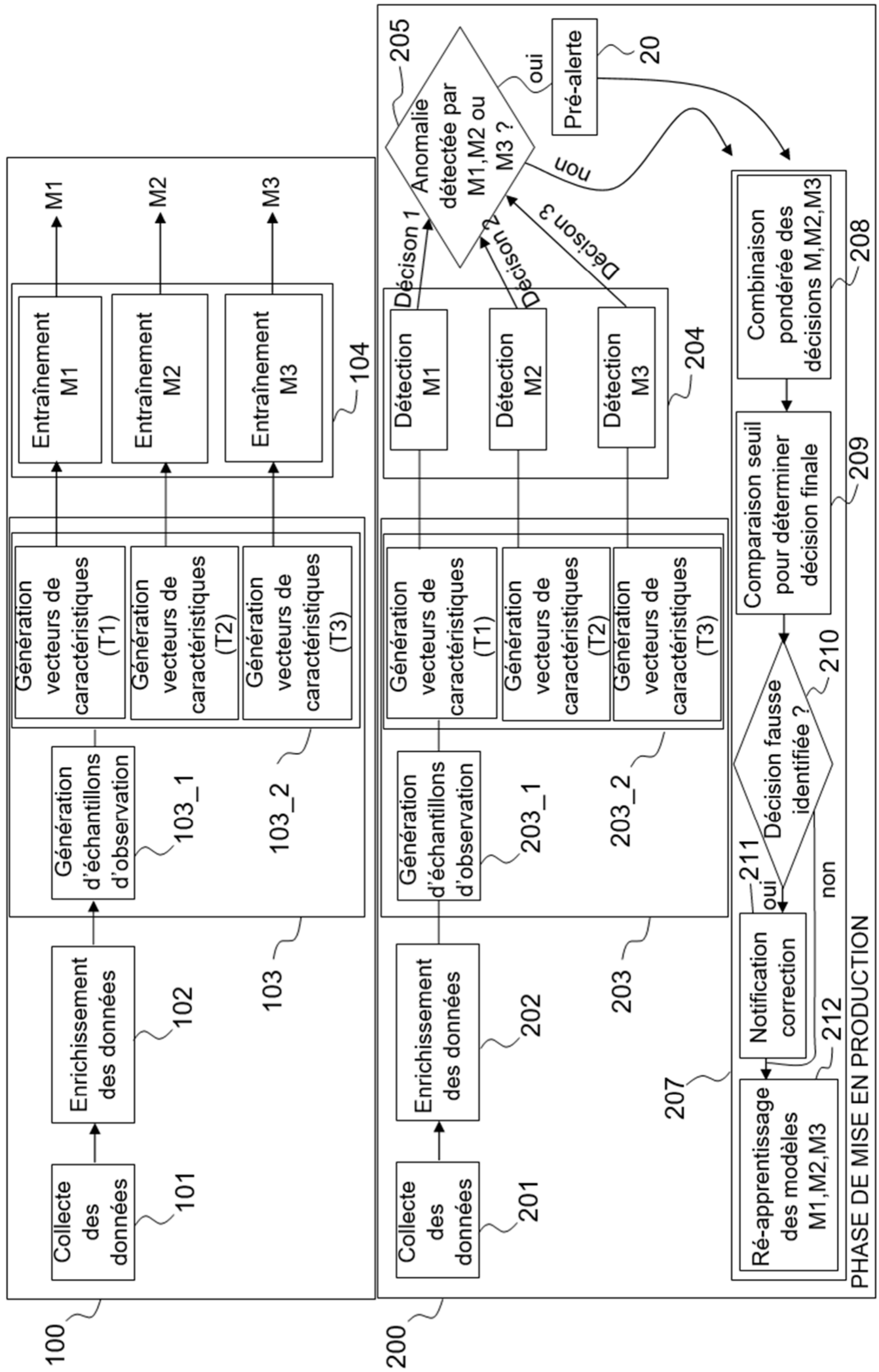
100
Collecte des données
101
Enrichissement des données
102
Génération d'échantillons d'observation
103_1
103_2
103
Génération vecteurs de caractéristiques (T1)
Génération vecteurs de caractéristiques (T2)
Génération vecteurs de caractéristiques (T3)
Entraînement M1
Entraînement M2
Entraînement M3
104
M1
M2
M3
200
Collecte des données
201
Enrichissement des données
202
Génération d'échantillons d'observation
203_1
203_2
203
Génération vecteurs de caractéristiques (T1)
Génération vecteurs de caractéristiques (T2)
Génération vecteurs de caractéristiques (T3)
Détection M1
Détection M2
Détection M3
204
Décison 1
Décison 2
Décison 3
Anomalie détectée par M1,M2 ou M3 ?
205
oui
non
Pré-alerte
20
Combinaison pondérée des décisions M,M2,M3
208
Comparaison seuil pour déterminer décision finale
209
Décision fausse identifiée ?
210
oui
non
211
Notification correction
212
Ré-apprentissage des modèles M1,M2,M3
207
PHASE DE MISE EN PRODUCTION

[Fig. 4]

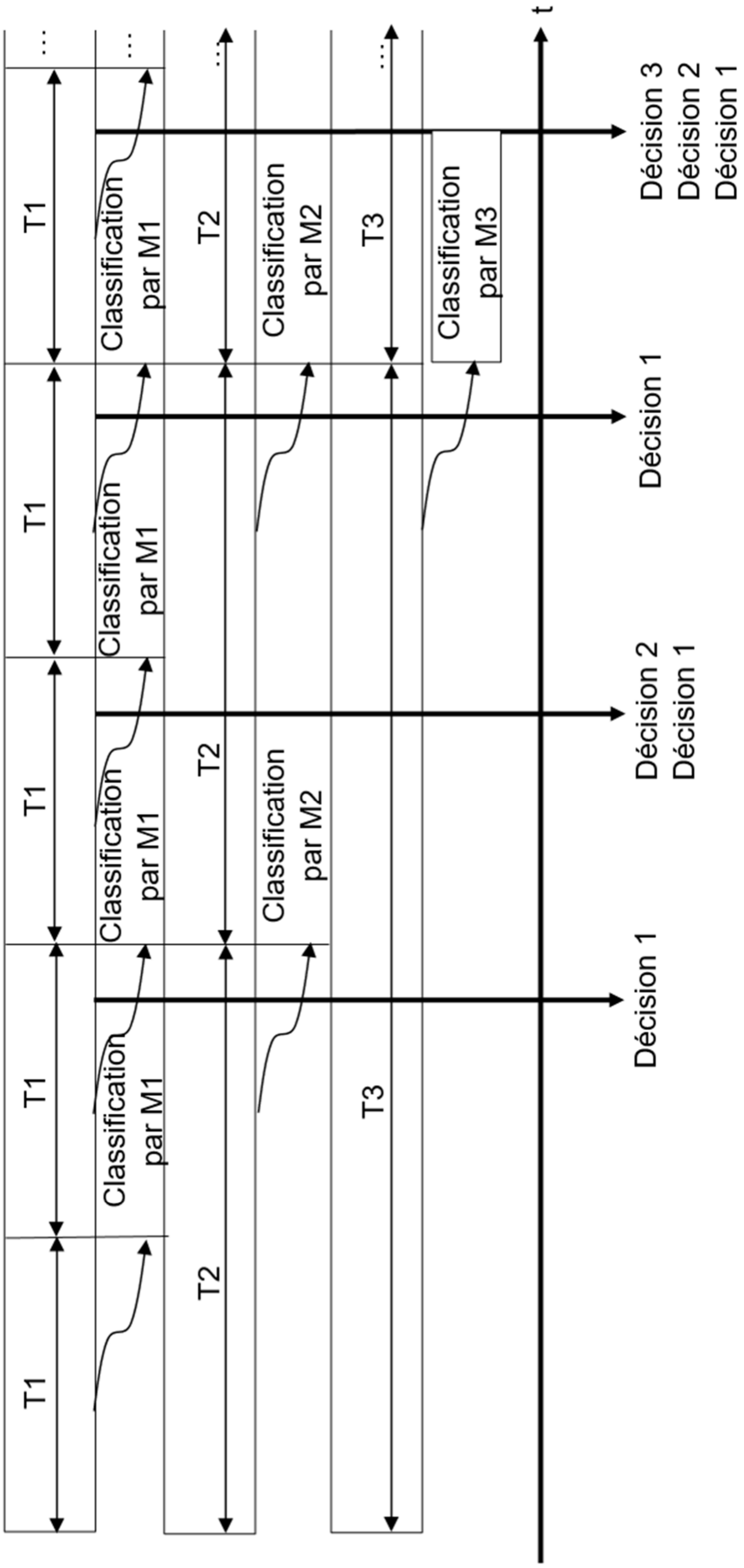
T1
T1
T1
T1
T1
T2
T2
T2
T3
T3
Classification par M1
Classification par M1
Classification par M1
Classification par M1
Classification par M2
Classification par M2
Classification par M3
Décision 1
Décision 2
Décision 1
Décision 1
Décision 3
Décision 2
Décision 1
t

[Fig. 5]

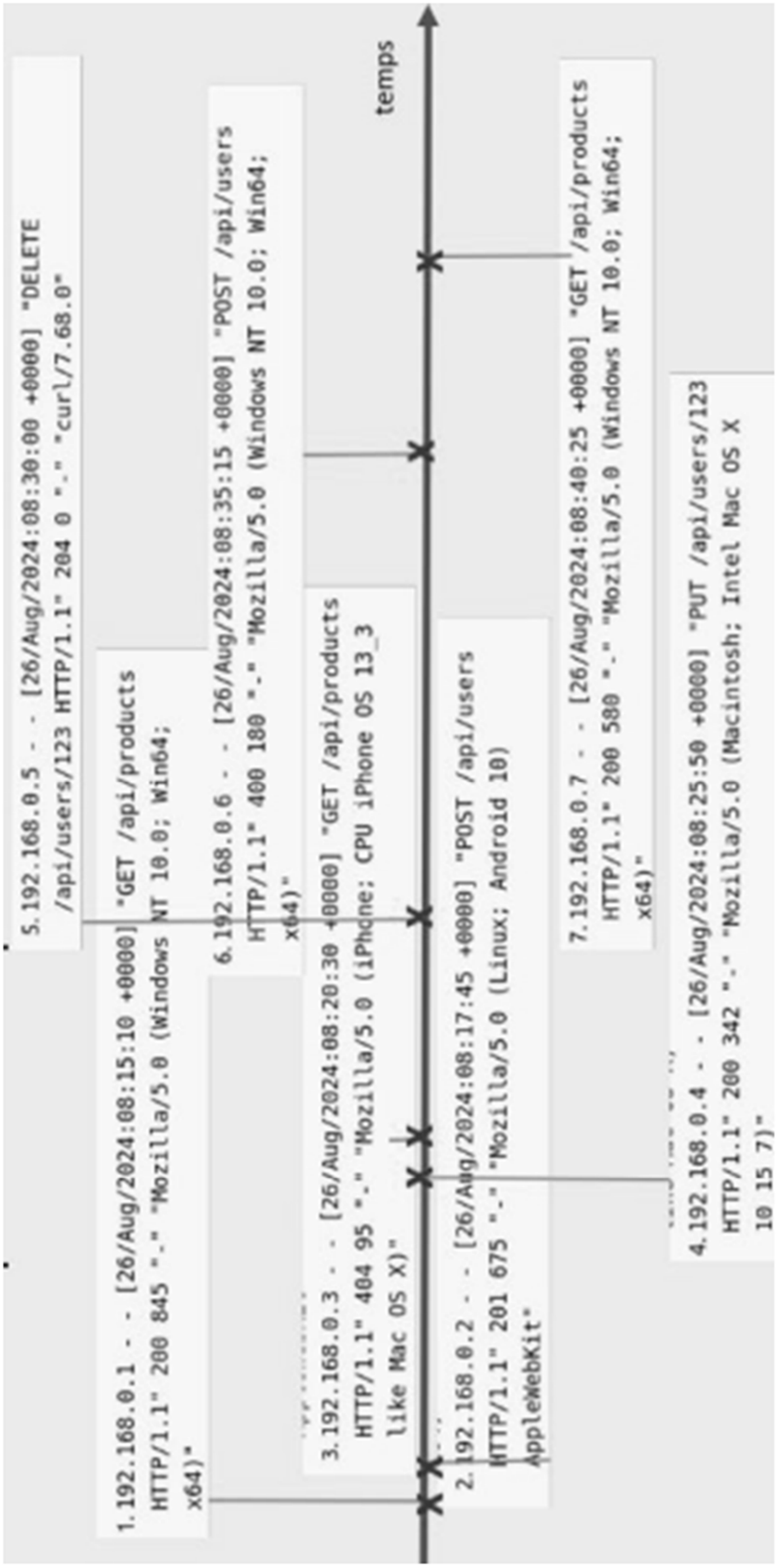
temps
1. 192.168.0.1 - - [26/Aug/2024:08:15:10 +0000] "GET /api/products HTTP/1.1" 200 845 "-" "Mozilla/5.0 (Windows NT 10.0; Win64; x64)"
2. 192.168.0.2 - - [26/Aug/2024:08:17:45 +0000] "POST /api/users HTTP/1.1" 201 675 "-" "Mozilla/5.0 (Linux; Android 10) AppleWebKit"
3. 192.168.0.3 - - [26/Aug/2024:08:20:30 +0000] "GET /api/products HTTP/1.1" 404 95 "-" "Mozilla/5.0 (iPhone; CPU iPhone OS 13_3 like Mac OS X)"
4. 192.168.0.4 - - [26/Aug/2024:08:25:50 +0000] "PUT /api/users/123 HTTP/1.1" 200 342 "-" "Mozilla/5.0 (Macintosh; Intel Mac OS X 10 15 7)"
5. 192.168.0.5 - - [26/Aug/2024:08:30:00 +0000] "DELETE /api/users/123 HTTP/1.1" 204 0 "-" "curl/7.68.0"
6. 192.168.0.6 - - [26/Aug/2024:08:35:15 +0000] "POST /api/users HTTP/1.1" 400 180 "-" "Mozilla/5.0 (Windows NT 10.0; Win64; x64)"
7. 192.168.0.7 - - [26/Aug/2024:08:40:25 +0000] "GET /api/products HTTP/1.1" 200 580 "-" "Mozilla/5.0 (Windows NT 10.0; Win64; x64)"

Europäisches Patentamt
European Patent Office
Office européen des brevets

# RAPPORT DE RECHERCHE EUROPEENNE

Numéro de la demande
EP 25 21 7955

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | KR 102 580 433 B1 (UNIV HOSEO ACAD COOP FOUND [KR]) 18 septembre 2023 (2023-09-18)<br>* figures 1,3,5-6 *<br>* alinéas [0054] - [0055], [0060] - [0071] *<br>----- | 1-10 | INV.<br>H04L9/40<br>G06F21/55<br>G06F21/57<br>G06N20/00 |
| A | AGATE VINCENZO ET AL: "Enhancing IoT Network Security with Concept Drift-Aware Unsupervised Threat Detection",<br>2024 IEEE SYMPOSIUM ON COMPUTERS AND COMMUNICATIONS (ISCC), IEEE,<br>26 juin 2024 (2024-06-26), pages 1-6, XP034741597,<br>DOI: 10.1109/ISCC61673.2024.10733733<br>* alinéas [00IV] - [000V] *<br>----- | 1-10 | ADD.<br>H04L41/0631<br>H04L41/069<br>H04L41/142<br>H04L41/16<br>H04L43/04 |
| A | US 2020/387797 A1 (RYAN SID [CA] ET AL) 10 décembre 2020 (2020-12-10)<br>* figures 39-41 *<br>* alinéas [0189], [0207] - [0209] *<br>* revendications 1-20 *<br>----- | 1-10 | |
| | | | **DOMAINES TECHNIQUES RECHERCHES (IPC)** |
| A | WO 2024/093207 A1 (SUZHOU METABRAIN INTELLIGENT TECHNOLOGY CO LTD [CN]) 10 mai 2024 (2024-05-10)<br>* alinéas [0003] - [0200] *<br>----- | 1-10 | H04L<br>G06F |

Le présent rapport a été établi pour toutes les revendications

1

| Lieu de la recherche | Date d'achèvement de la recherche | Examinateur |
|---|---|---|
| Munich | 19 décembre 2025 | Jeampierre, Gérald |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................................................
& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 25 21 7955

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-12-2025

| Document brevet cité au rapport de recherche | Date de publication | Membre(s) de la famille de brevet(s) | Date de publication |
|---|---|---|---|
| KR 102580433 B1 | 18-09-2023 | AUCUN | |
| US 2020387797 A1 | 10-12-2020 | AUCUN | |
| WO 2024093207 A1 | 10-05-2024 | CN 115422264 A | 02-12-2022 |
| | | WO 2024093207 A1 | 10-05-2024 |

EPO FORM P0460

Pour tout renseignement concernant cette annexe : voir Journal Officiel de l'Office européen des brevets, No.12/82